# EUROPEAN PATENT SPECIFICATION

(11) **EP 1 688 033 B1**
(45) Date of publication and mention of the grant of the patent: **02.04.2008**
(21) Application number: 06100752.2
(22) Date of filing: 24.01.2006
(51) Int. Cl.: A01G 9/24

(54) **Cover element for greenhouses or the like**
Abdeckelement für ein Treibhaus
Element de couverture pour une serre

(30) Priority: 04.02.2005 IT SV20050007
(43) Date of publication of application: 09.08.2006
(73) Proprietor: ROCCAFORTE, Giacomo, 17023 Ceriale SV (IT)
(72) Inventor: ROCCAFORTE, Giacomo, 17023 Ceriale SV (IT)
(74) Representative: Karaghiosoff, Giorgio Alessandro

(56) References cited:
- WO-A-92/16702
- WO-A-99/53745
- DE-A1- 3 919 507
- DE-U1- 8 620 528
- US-A- 4 345 818

## Description

The invention relates to a cover element for greenhouses or the like, which includes a first rigid transparent panel-like element (3) having a predetermined size.

Greenhouse roofs are known to generally have two pitches, formed by alignment of transparent panels, generally made of glass, supported by a plurality of horizontal members and inclined cross members. During the summer, greenhouses are normally covered by special nets and/or painted to limit light penetration, thereby preventing overheating. This involves an increase of material and labor costs.

For example the document DE U 8620528 describes a greenhouse with a rigid transparent panel-like element having areas with a high light transmission coefficient, i.e. transparent areas, alternated with areas with a low light transmission coefficient, i.e. opaque areas.

The document US 4345818 describes a device for illumination and heating of the interior of building using solar radiation. The device comprises means for collecting solar energy from a large surface area and condensing said energy to impinge upon the small area on the input end of the light guide means by special thin means: narrows light guide means for transporting the energy through exterior building surface and means for dispersing said energy to useful locations within said building.

Therefore, an object of this invention is to obviate the above drawback and provide, using simple and inexpensive means, a cover element as described hereinbefore, which allows automatic heat control for greenhouses, as a function of solar radiation changes, not only during the various periods of the year, but also within a single day. In other words, a substantially constant temperature is desired in the greenhouse, or anyway a temperature with changes that crops can withstand, while avoiding the use of the various covers currently in use, mechanical moving parts and especially with no human assistance, therefore with a considerable reduction of the overall greenhouse management costs.

The invention fulfils the above objects by providing a cover element such as the one described hereinbefore, wherein the first rigid transparent panel-like element has areas with a high light transmission coefficient, particularly substantially transparent areas, alternated with areas with a low, particularly substantially zero, light transmission coefficient, i.e. opaque areas. Since this first arrangement would reduce solar radiation in the greenhouse during the summer but during the winter as well, optical means may be provided for deviating and concentrating light on the opaque areas when the sun is at its highest position above the horizon, and for progressively deviating and concentrating light on the transparent areas when the sun is at its lowest position above the horizon, in such a manner as to automatically control solar radiation in the greenhouse and prevent any excessive heat changes therein. As mentioned above, an overheated greenhouse would require adequate covering or even a cooling system. On the other hand, these optical means may have such characteristics as to compensate for the presence of opaque areas during the winter and keep the temperature in the greenhouse substantially as high as it would be if a wholly transparent panel were used.

As is known, the sun rises substantially in the East and falls substantially in the West, and forms an arch whose greatest height from the horizon is at a minimum during the winter solstice, progressively increases until the summer solstice and decreases again toward the winter solstice.

The transparent areas and the opaque areas may alternate with one another in a predetermined regular or irregular pattern. The pattern of opaque and transparent areas substantially depends on the latitude of the roof site, on the roof pitch facing the South and on pitch orientation with respect to the East-West axis. As mentioned above, special optical means may be provided, at each pair of areas, consisting of one opaque area and one adjacent transparent area, for deviating and concentrating light alternately on the opaque area and the transparent area.

Advantageously, the transparent areas and opaque areas may be arranged in such a pattern that at least one partition line between the opaque area and the transparent area of each pair of areas consisting of one opaque area and one adjacent transparent area, is oriented substantially along the East-West axis. In other words, the transparent area is placed in the North-South direction with respect to the adjacent opaque area. As will be more apparent hereafter, this arrangement is critical for proper operation of the cover element.

As mentioned above, the cover element of this invention may be installed on the roof of a greenhouse. In this case, the transparent areas and opaque areas may be arranged in such a pattern that at least one partition line between the opaque area and the transparent area of each pair of areas consisting of one opaque area and one adjacent transparent area, is inclined with respect to the ridge of the roof to an extent substantially corresponding to the deviation of said ridge from the East-West axis. Therefore, thanks to this arrangement, this partition line is oriented substantially along the East-West axis, as desired.

The opaque areas and the transparent areas cover either equal or different areas and this substantially depends on the latitude of the site in which the cover element is placed.

The optical means for deviating and concentrating light may be a condenser lens. Any type of condenser lenses may be used, provided that they assure the light deviating effect required for operation. Configurations of such lenses particularly include planoconvex lenses, double-convex lenses and even Fresnel lenses. The condenser lens is placed at a predetermined distance from the outer face of the first rigid panel. The lens may have a size that substantially corresponds to the sum of the areas of one opaque area and the adjacent transparent area transverse to the axis of rotation of the lens, which is oriented with said axis of rotation of the lens substantially along the East-West axis.

The curvature of the lens is calibrated in such a manner as to deviate and concentrate light on the opaque area when the sun is at its highest position above the horizon, i.e. in the middle of the day and at the time of year near the summer solstice, in which the solar radiation has a steeper inclination, and progressively deviate and concentrate light on the transparent area when the sun is at its lowest position above the horizon, i.e. in the morning and in the afternoon, and at the time of year near the winter solstice, thereby maximizing light penetration into the greenhouse.

According to a preferred embodiment of the invention, which relates to an ideal position of the cover element or the roof formed by said cover elements, and in which alignment occurs in the East-West axis (which embodiment will be described in further detail in the description of the drawings), the opaque areas and the transparent areas may be also arranged in alternate strips, extending substantially along the full width of the first rigid panel and are oriented longitudinally substantially along the East-West axis. Here one condenser lens may be provided, e.g. without limitation a planoconvex cylindrical lens, i.e. having the shape of a cylindrical segment, for each pair of strips, formed by one opaque strip and one adjacent transparent strip.

Each lens has a longitudinal extension which is substantially equal to the width of the first panel, i.e. substantially equal to the longitudinal extension of the opaque strips and the transparent strips, and an extension transverse to its axis which is substantially equal to the sum of the widths of one opaque strip and one adjacent transparent strip. The axis of the lens may be oriented parallel to the longitudinal extension of the underlying strips that is, assuming an ideal position of the roof or cover element, substantially along the East-West axis. The curvature of the lens and its distance from the first panel will be determined in such a manner as to optimize the desired effect of alternate deviation of solar radiation on the opaque area and on the transparent area.

According to an advantageous improvement, each condenser lens may be replaced by an equivalent stepped lens, known as Fresnel condenser lens. As is known, this particular lens is a highly compact and light condenser, whose concentric circles, which are cut in such a manner that each is a section of a convex surface, provide the effect of a conventional condenser lens, the latter having a much higher thickness and weight. Assuming equal performances, particularly an equal optical performance, Fresnel lenses are thinner and have a lighter weight. This involves lower manufacturing costs, a smaller amount of material in use, thence a reduced overall weight of the cover element, and a smaller amount of light absorbed by the lens.

According to another highly advantageous construction improvement, the lenses may be integrated in a second substantially rigid panel, which is formed with said condenser lenses integral therewith, and may be obtained, for instance, by molding of transparent plastic material. This panel may be placed at a predetermined distance from and parallel to the outer face of the first panel and have the same size as the latter, or a size corresponding to two or more adjacent panels, or even to the whole roof pitch.

According to another feature, another external flat transparent low-thickness panel may be possibly provided for protecting the panel with the integrated lenses and promote drainage of rainwater.

The first panel may be made of a rigid material, particularly transparent glass or the like.

The cover element may be directly integrated in the roof of a greenhouse. In this case, the first panel may advantageously consist of one of the cover panels of the greenhouse roof, which affords considerable savings in the manufacturing costs for the cover element of this invention. Particularly, the novel cover element may be formed by adapting an existing greenhouse roof, i.e. by applying the opaque areas and the panels with integrated lenses to the glass panels of any traditional greenhouse roof.

The pattern of opaque areas and transparent areas may differ from the one described above. For example, a checkerboard pattern may be provided. Thus, the lenses will be arranged in a correspondingly staggered pattern, in a direction perpendicular to the axis of rotation of the lens. Otherwise, the transparent areas, the opaque areas and the condenser lenses may have, for instance, corresponding profiles, which are at least partly curved. Obviously, as mentioned above, the pattern of opaque areas and transparent areas, as well as their shape and orientation with reference to the shape of each panel and/or the roof depends on the orientation of the panel, on the latitude, and on the inclination of the panel to a horizontal plane.

The opaque areas may be formed in any manner, e.g. by applying materials such as paint, adhesive tape, strips of opaque material, or the like, on the outer face and/or the inner face of the first panel.

The advantages of the invention with the features described heretofore are apparent from the above description and consist in a wholly automatic control of solar radiation in the greenhouse, as well as the prevention of any excessive heat changes therein. The need of using summer covers, having light shading functions, is also avoided. Furthermore, the cover element of this invention may be useful in protecting the greenhouse roof, particularly against rough weather conditions, such as hail, or the like.

However, this invention relates to further features, in addition to those of the cover element described heretofore, which afford additional advantages.

In accordance to a highly advantageous improvement, the opaque areas may be formed by placing photovoltaic modules on the outer face of the first panel, which modules are preferably arranged in groups, forming strips oriented substantially along the East-West axis and alternated with transparent strips.

In this case, the cover element of the invention is composed of a first transparent panel, supporting a plurality of photovoltaic modules which form the areas or strips having a low or zero light transmission coefficient, i.e. the opaque areas, a second transparent panel of substantially the same size as the first panel, having the function of covering and protecting the photovoltaic modules, and a third panel of substantially the same size as the first and the second panels, which may be supported at a predetermined distance from the second panel by rigid arms or the like, in which the condenser lenses are integrated. A rigid retaining, supporting and sealing frame may be further provided all along the peripheral edges of the first and the second panels.

As mentioned above, the first transparent panel advantageously consists of one of the transparent cover panels of the greenhouse roof, whereas the frame may consist at least partly of the rigid members for supporting said transparent panels, such as metal longitudinal or cross members.

The cover element of this invention has been disclosed with reference to a greenhouse cover, but it may be also advantageously used for covering buildings or environments of any kind or purpose, such as verandas, skylights, sports facilities, or the like.

The cover element of this invention has a number of advantages. It provides automatic heat control within the greenhouse, as well as power generation at very low cost. The cost of the above cover element is considerably lower than equivalent traditional ground-based photovoltaic systems, both because the frame and glass covers of greenhouses are also utilized and because, unlike traditional ground-based photovoltaic systems, the ground below the panels may be utilized for cultivation, which reduces the overall cost of the photovoltaic system. Therefore, there is no need to buy a lot to be only used for power generation, but existing cultivation lots may be utilized, at actually no cost. No part of the greenhouse has to be replaced. Furthermore, the roof cover elements are all used to form the cover element. Also, an increased production and yield is obtained from each photovoltaic module, thanks to the fact that radiation of a wider surface than the one covered by the module itself are concentrated thereon. In fact, thanks to the size and the radiation concentrating function of lenses, a higher performance of photovoltaic modules is obtained. Therefore, light is better utilized, as appropriate, for greenhouse heating or power generation. The modules keep on generating energy, although to a reduced extent, during the winter, and generally when they are only partly impinged by the light beam directed by the lens, thanks to the scattered light that reaches the module even out of the range of the lens. This is achieved automatically, without using moving parts. This affords a reduction of maintenance costs, a longer system life, and a reduction of operating costs, as no electricity or fuel for moving parts is required. A considerable cost reduction for greenhouse heating may be obtained, as the electricity being generated may be fed into the mains and use in the winter to assist greenhouse hearing, as an alternative to using fuel, such as oil or the like. Furthermore, a double cover is formed on the greenhouse roof, which provides a better thermal insulation, and a consequent reduction of the energy required for heating. Finally, a dramatic reduction of harmful emissions from greenhouse heating systems may be obtained.

Further features and improvements will form the subject of the dependent claims.

The characteristics of the invention and the advantages derived therefrom will be more apparent from the following detailed description of the annexed drawings, in which:
Fig. 1 is a general schematic front view of a traditional greenhouse, in which a pitch is covered with the cover element of this invention, with the sun shown in the two low and high positions above the horizon.

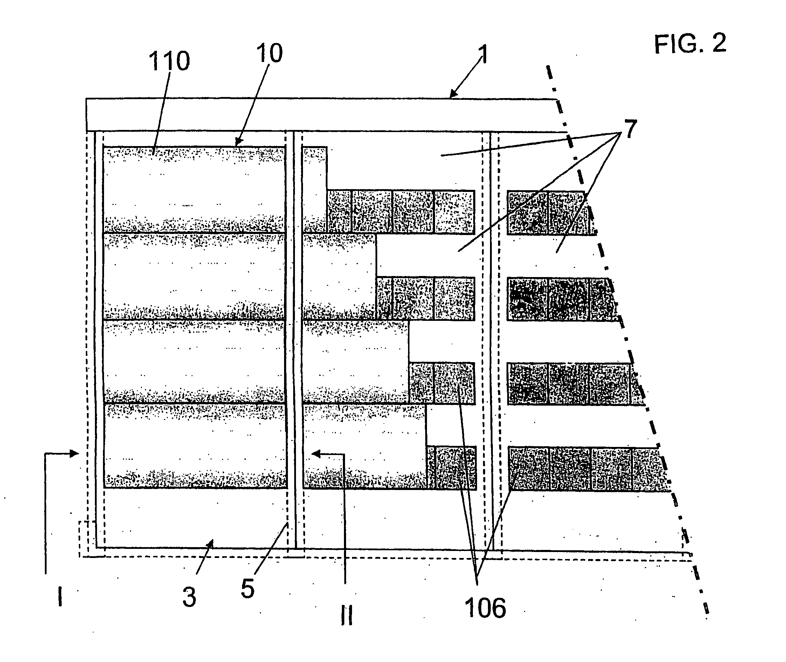

Fig. 2 is a partial plan view of the greenhouse roof pitch of Fig. 1 covered with the cover element of this invention.

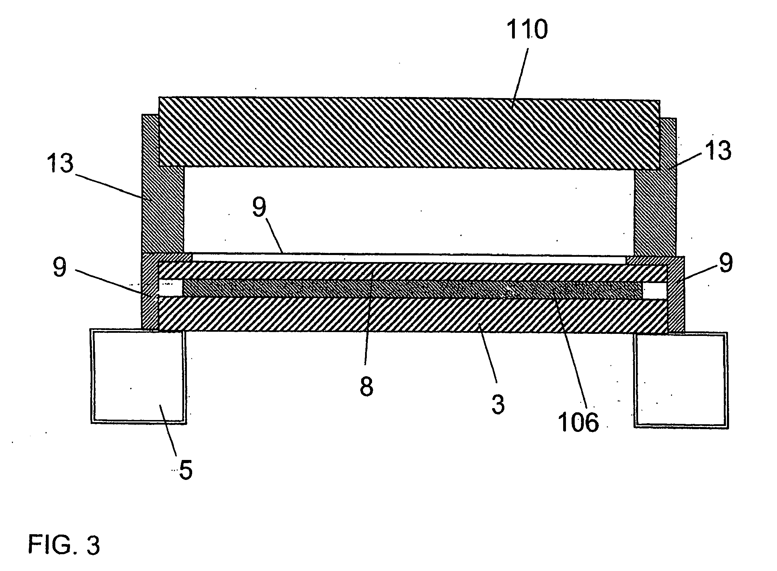

Fig. 3 is a sectional view taken along line III of **Fig. 2****.**
Fig. 4 shows the behavior of the cover element of this invention, in a sectional view taken along a line transverse to the ridge of the greenhouse roof, when the sun is in a relatively low position above the horizon.

Fig. 5 is a view similar to Figure 4, with the sun in a relatively high position above the horizon.

For the sake of simplicity, the embodiment that is shown in the above figures relates to the ideal position and orientation of a greenhouse roof, thence of at least one cover element, i.e. in which the panel or the whole roof has a rectangular shape, with one side oriented along the East-West axis (particularly the shorter side) and one side oriented along the North-South axis (particularly, the longer side). The latitude and the roof pitch, hence the slope of the cover element/s to the horizontal plane are selected so that the opaque and transparent strips have substantially the same extension and are arranged in a regular pattern. The pattern and the ratio of opaque areas to transparent areas may be easily changed by adjusting the orientation of the cover element or the roof and/or the slope thereof to a horizontal plane and keeping the pattern of opaque and transparent areas unaltered. This produces an angular and translational offset between the profile of the roof cover elements and the profile of the opaque and transparent areas, whose intersections defines the pattern for different orientations and different positions of the roof or the cover elements.

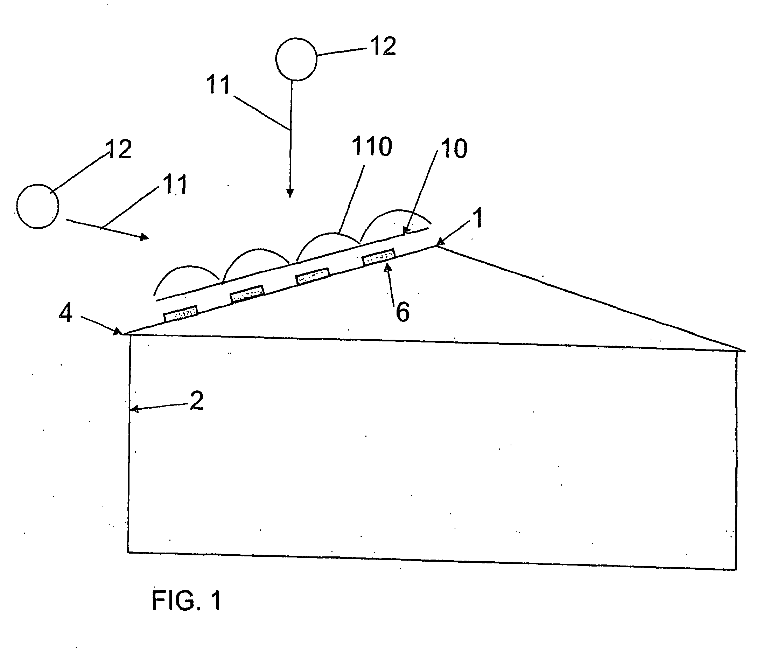

Referring to Fig. 1, a traditional greenhouse is shown, having a two-pitched roof. If allowed by ground relief, advantages are typically achieved by orienting the greenhouse with the roof ridge 1 substantially along the East-West direction. Hence, one of the two pitches faces the south, which is highly advantageous for greenhouse heating. Nevertheless, even considerable offsets of the ridge orientation with respect to said preferred direction do not cause significant performance losses in the operation of the cover device of this invention. The greenhouse has a plurality of vertical roof supporting posts 2, each pitch of the roof being composed of a plurality of panels 3, generally made of glass and generally having a rectangular shape, disposed side by side along the longer side in a direction parallel to the roof ridge 1, which generally consists of a metal longitudinal member. The shorter sides of each panel 3 abut against the roof ridge 1 and a longitudinal member 4, generally made of metal, which extends parallel to the ridge 1 at the base of the roof pitch. Larger pitches may obviously include one or more intermediate longitudinal members and two or more rows of panels 3 aligned parallel to the roof ridge 1. The longer sides of each panel 3 abut against two cross members 5, generally made of metal, which are oriented transverse to the roof ridge 1 and are supported at the opposite ends by the ridge 1 and the longitudinal member 4. Fig. 1 shows the cover element of this invention mounted to one of the two roof pitches, particularly the one facing the south, which has the stronger insolation, but it may be also mounted, if desired, to the pitch that faces the north, or possibly to one or more of the peripheral vertical walls of the greenhouse.

A plurality of photovoltaic modules 106, arranged in rows (6) that extend longitudinally parallel to the roof ridge 1, are provided on the outer surface of each glass panel 3. Any known type of photovoltaic module 106 may be used, although the use of modules made of amorphous silicon is preferred, which are poorly affected by penumbra. The rows (6) of photovoltaic modules 106, extend along a length substantially corresponding to the width of the panel 3, and are spaced to a predetermined extent in a direction transverse to the roof ridge 1, so that the surface of the panel 3 is composed of a plurality of substantially opaque strips, formed by the strips (6) of photovoltaic modules 106, alternated with clear strips, which are substantially transparent. The photovoltaic modules 106 are electrically connected to each other, for instance by input-output cables, bypass diodes, or else, according to one of the techniques widely known to those of ordinary skill in the art, for simple and fast connection of photovoltaic modules 106. The generated power may be led outside the greenhouse over one or more wires, which may be secured, for instance, to the longitudinal members 4 or be directly held therein if such longitudinal members have a tubular shape, as is often the case. A panel 8 is further provided for covering then photovoltaic modules 106, which has substantially the same size and is possibly thinner than the underlying panel 3, as it has no supporting function. The support panel 3 and the covering panel 8 have a peripheral retaining, supporting and sealing frame 9 which extends along their peripheral edges. Such frame 9, which may be made of any material, e.g. aluminum, particularly has the function of preventing any ingress of moisture between the panel 3 and the covering panel 8, which would strongly affect proper operation of photovoltaic modules 106. To this purpose, advantages may be achieved by sealing the edges, e.g. with silicone. The frame 9 may at least partly consist of the members that support the panels 3, i.e. the ridge 1, the longitudinal member 4 and the cross members 5.

A plurality of condenser lenses 110, particularly in this case cylindrical planoconvex lenses, are provided at a predetermined distance from the outer face of the covering panel 8, each of such lenses being supported by arms 13 that extend vertically to the covering panel 8 and abut against the retaining frame 9. The flat side of the lens 110 faces the covering panel 8 and is parallel thereto, whereas the convex side of the lens 110 faces the outside. The axis of each lens 110 is oriented parallel to the roof ridge 1, and each lens 110 is substantially as long as the rows (6) of photovoltaic modules 106, and substantially as wide as the sum of the widths of one row (6) of photovoltaic modules 106 and one adjacent transparent strip 7, particularly the strip 7 immediately northward therefrom. Thus, each row (6) of photovoltaic modules 106 and each adjacent transparent strip 7 are covered by a condenser lens 110 which extends, transverse to its own axis, substantially from the lower edge of one row (6) of photovoltaic modules 106 to the upper edge of the directly adjacent transparent strip 7 toward the roof ridge 1. As mentioned above, the condenser lenses 110 may be also integrated in a single panel 10, which may be, for instance, molded from transparent plastic. This panel 10 may have substantially the same size as the underlying panels 8 and 3, and may usefully act as a weather protection panel.

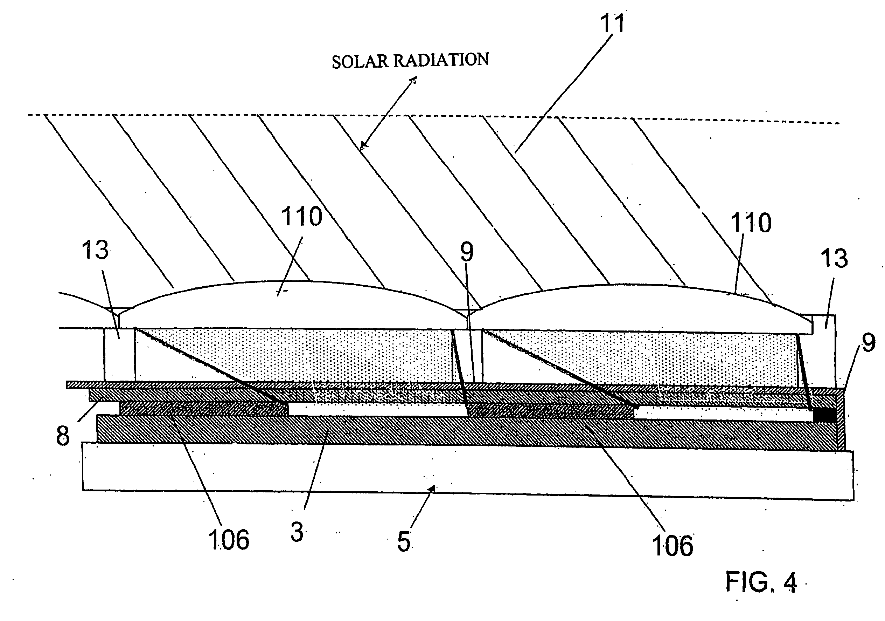

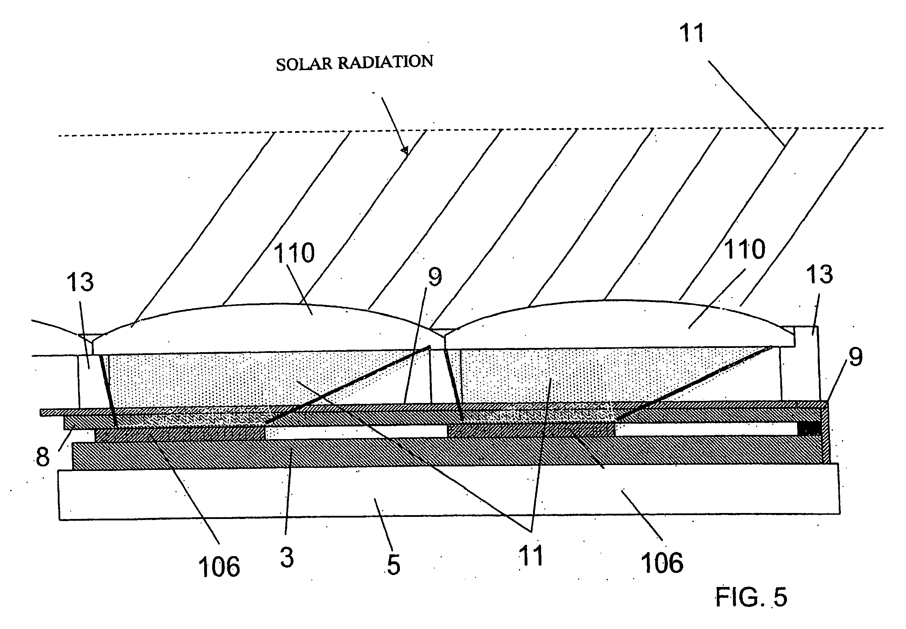

Referring now to Figs. 1, 4 and 5, the operation of the cover element is shown. When the sun 12 is in a relatively low position above the horizon, the condenser lenses 110 deviate and concentrate the sun light beam 11 on the transparent strips 7, thereby compensating for the presence of the opaque strips formed by the rows (6) of photovoltaic modules and allowing light to penetrate into the greenhouse to an extent substantially corresponding to or even greater than what would be achieved using a wholly transparent pitch. However, when the sun 12 is in a relatively high position above the horizon, and insolation might be excessive in the greenhouse, the condenser lenses 110 progressively deviate and concentrate the light beam 11 on the rows (6) of photovoltaic modules 106, thereby preventing overheating in the greenhouse and allowing the generation of electricity to be used for any purpose.

Obviously, the invention is not limited to the embodiment described and illustrated herein but may be greatly varied, especially as regards construction. For example, advantages may be obtained from using Fresnel lenses instead of cylindrical planoconvex lenses, due to their lower weight with equal characteristics. The portion of light deviated on the modules or the transparent strips during the year may be controlled by adjusting the distance of the lenses from the photovoltaic modules. To this end, the panel supporting arms with the lenses fitted thereon might be adjustable in length, e.g. with the help of screw means or the like. Alternatively, the arrangement of the rows of photovoltaic modules may differ from that described above, e.g. they may form a checkerboard pattern or archs. Otherwise, as an alternative to or in combination with the above, optical devices other than those described above, e.g. concave mirrors, may be used. Furthermore, the cover element of this invention may be also advantageously used in combination with environments other than a greenhouse, such as verandas or the like. The above is without departure from the guiding principle disclosed above and claimed below. Thus, the embodiment that has been illustrated for the purpose of a better understanding of the inventive principle is to be intended without limitation to said principle, although it relates to a particular condition which makes the achieved technical effect more apparent. However, those skilled in the art will be perfectly able to determine the shape, arrangement and extension of opaque areas and transparent areas, as well as the shape of the lenses, for any orientation of the roof and/or a cover element, for any latitude and for any slope of said roof or said cover element to the horizontal plane.

## Claims

1. A cover element for greenhouses or the like, including a first rigid transparent panel-like element (3) having a predetermined size, in which said first element has areas (7) with a high light transmission coefficient, particularly substantially transparent areas, alternated with areas (6) with a low, particularly substantially zero, light transmission coefficient, i.e. opaque areas, **characterized in that** optical means are provided for deviating and concentrating light (11) on the opaque areas when the sun (12) is at its highest position above the horizon, and for progressively deviating and concentrating light (11) on the transparent areas when the sun (12) is at its lowest position above the horizon, in such a manner as to automatically control solar radiation (11) in the greenhouse and prevent any excessive heat changes therein.

2. A cover element as claimed in claim 1, **characterized in that** the transparent areas (7) and the opaque area (6) are alternated in a predetermined regular pattern, whereas special optical means are provided, at each pair of areas, consisting of one opaque area (6) and one adjacent transparent area (7) for deviating and concentrating light (11) alternately on the opaque area (6) and the transparent area (7).

3. A cover element as claimed in claims 1 and 2, **characterized in that** the transparent areas (7) and opaque areas (6) are arranged in such a pattern that at least one partition line between the opaque area (6) and the transparent area (7) of each pair of areas consisting of one opaque area (6) and one adjacent transparent area (7) is oriented substantially along the East-West axis.

4. A cover element as claimed in one or more of the preceding claims, **characterized in that** it is installed on the roof of a greenhouse, and the transparent areas (7) and opaque areas (6) are arranged in such a pattern that at least one partition line between the opaque area (6) and the transparent are (7) of each pair of areas consisting of one opaque area a (6) and one adjacent transparent area (7) is inclined with respect to the ridge (1) of the roof to an extent substantially corresponding to the deviation of said ridge (1) from the East-West axis.

5. A cover element as claimed in one or more of the preceding claims, **characterized in that** the ratio between the extensions of opaque areas (6) and transparent areas (7) is a function of the latitude of the site in which said cover element is placed.

6. A cover element as claimed in one or more of the preceding claims, **characterized in that** the special optical means for deviating and concentrating light (11) consist of a condenser lens (110), which is placed at a predetermined distance from the outer face of the first rigid panel (3) the lens (110) having size that substantially corresponds to the sum of the areas of one opaque area (6) and the adjacent transparent area (7) transverse to the axis of rotation of the lens (110), which is oriented with said axis of rotation substantially along the East-West axis

7. A cover element as claimed in claim 6, **characterized in that** the condenser lens (110) is a planoconvex lens, a double-convex lens or a Fresnel lens.

8. A cover element as claimed in any of the preceding claim 6, 7 **characterized in that** the curvature of the lens (110) is calibrated in such a manner as to deviate and concentrate light (11) on the opaque area (6) when the sun (12) is at its highest position above the horizon, and progressively deviate and concentrate light (11) on the transparent area (7) when the sun (12) is at its lowest position above the horizon.

9. A cover element as claimed in any of the preceding claims 6-8 **characterized in that** the opaque areas (6) and the transparent areas (7) are arranged in alternate strips, extending substantially along the full width of the first rigid panel (3) and are oriented longitudinally substantially along the East-West axis, one condenser lens (110) being provided for each pair of strips, formed by one opaque strip (6) and one adjacent transparent strip (7).

10. A cover element as claimed in one or more of the preceding claims 6-9 **characterized in that** each lens (110) has a longitudinal extension which is substantially equal to the width of the first panel (3) i.e. equal to the longitudinal extension of the opaque strips (6) and the transparent strips (7) and an extension transverse to its axis which is substantially equal to the sum of the widths of one opaque strip (6) and one adjacent transparent strip (7), the axis of the lens (110) being oriented parallel to the longitudinal extension of the underlying strips, i.e. substantially along the East-West axis.

11. A cover element as claimed in one or more of the preceding claims 6-10 **characterized in that** each condenser lens (110) is an equivalent Fresnel condenser lens.

12. A cover element as claimed in one or more of the preceding claims 6-11 **characterized in that** the condenser lenses (110) are integrated in a second substantially rigid panel (10), which is formed with said condenser lenses (110) integral therewith, said panel (10) being placed at a predetermined distance from and parallel to the outer face of the first panel (3) and having the same size as it.

13. A cover element as claimed in one or more of the preceding claims, **characterized in that** the first panel (3) is made of a rigid material, particularly transparent glass or the like, the second panel (10) being, also made of a rigid material, particularly transparent plastic or the like.

14. A cover element as claimed in one or more of the preceding claims, **characterized in that** it is integrated in the roof of a greenhouse, the first panel (3) consisting of one of the cover panels of the greenhouse roof.

15. A cover element as claimed in one or more of the preceding claims, **characterized in that** the opaque areas (6) and the transparent areas (7) are arranged in a checkerboard pattern, whereas the lenses (110) are arranged in a correspondingly staggered pattern, in a direction perpendicular to the axis of rotation of the lens (110).

16. A cover element as claimed in one or more of the preceding claims, **characterized in that** the opaque areas (6) may be formed by applying materials such as paint, adhesive tape, strips of opaque material, or the like, on the outer face and/or the inner face of the first panel (3).

17. A cover element as claimed in one or more of the preceding claims, **characterized in that** the opaque areas (6) are formed by placing photovoltaic modules (106) on the outer face of the first panel (3) which modules are preferably arranged in groups, forming strips oriented substantially along the East-West axis and alternated with transparent strips (7).

18. A cover element as claimed in one or more of the preceding claims, **characterized in that** it is composed of a first transparent panel (3), supporting a plurality of photovoltaic modules (116) which form the areas or strips (6) having a low or zero light transmission coefficient, i.e. the opaque areas, a second transparent panel (8) of substantially the same size as the first panel, (3) having the function of covering and protecting the photovoltaic modules (116), and a third panel (10) of substantially the same size as the first (3) and the second panels, (8) which is supported at a predetermined distance from the second panel (8) by rigid arms (13) or the like, in which the condenser lenses (116) are integrated, a rigid retaining, supporting and sealing frame (9) extending all along the peripheral edges of the first (3) and the second panels (8).

19. A cover element as claimed in one or more of the preceding claims, **characterized in that** the first transparent panel (3) consists of one of the transparent cover panels of the greenhouse roof, whereas the frame (9) consists at least partly of the rigid members for supporting said transparent panels, such as metal longitudinal (4) or cross members (5).

20. A cover element as claimed in one or more of the preceding claims, **characterized in that** it is used for covering buildings or environments of any kind or purpose, such as verandas, skylights, sports facilities, or the like.

21. A roof for greenhouses or the like, having two pitches, one whereof being oriented substantially southwards, said southwardly oriented pitch being composed of a plurality of rigid transparent panels having a predetermined size, and arranged in adjacent positions substantially along the East-West axis and supported by a plurality of longitudinal members and rigid cross members, **characterized in that** at least some of said panels are as claimed in one or more of claims 1 to 20.

22. A roof as claimed in claim 21, **characterized in that** the transparent areas and the opaque areas are alternated in a predetermined regular pattern, which pattern is either regular or irregular and is a function of the latitude of the roof site, the roof pitch facing the South and on pitch orientation with respect to the East-West axis,

23. A roof for greenhouses, having a single pitch substantially oriented southwards, **characterized in that** said pitch is as claimed in claim 21.

24. A greenhouse, having a two-pitched roof, one whereof being substantially oriented southwards, **characterized in that** it has a roof as claimed in one or more of claims 21 to 23.

25. A greenhouse, having a single-pitched roof, substantially oriented southwards, **characterized in that** it has a roof as claimed in one or more of claims 21 to 23.

26. A cover element for greenhouses as claimed in one or more of the preceding claims 1-20 **characterized in that** another external flat transparent low-thickness panel is provided for protecting the panel with the integrated lenses and promote drainage of rainwater.

27. A roof for greenhouses as claimed in one or more of the preceding claims 21-23 **characterized in that** it has a cover element as claimed in claim 26.

28. A greenhouse as claimed in claims 24 and 25 **characterized in that** it has a roof as claimed in claim 27.

## Patentansprüche

1. Abdeckelement für Gewächshäuser oder ähnliche Vorrichtungen, bestehend aus einem ersten, transparenten, formstabilen plattenförmigen Element (3) mit vordefinierten Abmessungen, das Bereiche (7) mit einem hohen Lichtdurchlässigkeitsbeiwert, insbesondere völlig lichtdurchlässige Bereiche, enthält, die sich mit Bereichen (6) mit einem niedrigen Lichtdurchlässigkeitsbeiwert, der insbesondere Null sein kann und damit lichtundurchlässige Bereiche bildet, abwechseln, **gekennzeichnet dadurch, dass** optische Mittel eingesetzt werden, mit denen das Licht (11) auf die lichtundurchlässigen Bereiche abgelenkt und konzentriert wird, wenn die Sonne (12) ihren Höchststand über dem Horizont erreicht, und mit denen nach und nach eine Ablenkung und Konzentration des Lichts (11) auf die lichtdurchlässigen Bereiche erfolgt, wenn die Sonne (12) den niedrigsten Stand über dem Horizont erreicht, so dass die Sonneneinstrahlung (11) in das Gewächshaus automatisch kontrolliert wird und übermäßige Temperaturschwankungen in letzterem vermieden werden.

2. Abdeckelement nach Anspruch 1, **gekennzeichnet dadurch, dass** lichtdurchlässige Bereiche (7) und lichtundurchlässige Bereiche (6) sich nach einem vordefinierten regelmäßigen Muster abwechseln, wobei spezielle optische Mittel für jedes Bereichspaar eingesetzt werden, die jeweils aus einem lichtundurchlässigen Bereich (6) und einem benachbarten lichtdurchlässigen Bereich (7) zur abwechselnden Ablenkung und Konzentration des Lichts (11) auf den lichtundurchlässigen Bereich (6) und den lichtdurchlässigen Bereich (7) bestehen.

3. Abdeckelement nach Anspruch 1 und 2, **gekennzeichnet dadurch, dass** die lichtdurchlässigen Bereiche (7) und lichtundurchlässigen Bereiche (6) so angeordnet sind, dass zumindest eine der Trennlinien, wie sie zwischen den lichtundurchlässigen Bereichen (6) und den lichtdurchlässigen Bereichen (7) existieren, die besagte Paare aus jeweils einem lichtundurchlässigen Bereich (6) und einem benachbarten lichtdurchlässigen Bereich (7) bilden, im wesentlichen entlang der Ost-West-Achse verläuft.

4. Abdeckelement nach einem oder mehreren der vorherigen Ansprüche, **gekennzeichnet dadurch, dass** es auf dem Dach eines Gewächshauses angebracht ist und die lichtdurchlässigen Bereiche (7) und lichtundurchlässigen Bereiche (6) so angeordnet sind, dass zumindest eine der Trennlinien, wie sie zwischen den lichtundurchlässigen Bereichen (6) und den lichtdurchlässigen Bereichen (7) existieren, die besagte Paare aus jeweils einem lichtundurchlässigen Bereich (6) und einem benachbarten lichtdurchlässigen Bereich (7) bilden, gegenüber dem Dachfirst (1) in einem Maße geneigt ist, in dem besagter Dachfirst (1) von der Ost-West-Achse abweicht.

5. Abdeckelement nach einem oder mehreren der vorherigen Ansprüche, **gekennzeichnet dadurch, dass** das Verhältnis zwischen den Ausmaßen der lichtundurchlässigen Bereiche (6) und der lichtdurchlässigen Bereiche (7) eine Funktion der geografischen Breite des Standortes ist, an dem besagtes Abdeckelement installiert ist.

6. Abdeckelement nach einem oder mehreren der vorherigen Ansprüche, **gekennzeichnet dadurch, dass** die speziellen optischen Mittel zur Ablenkung und Konzentration des Lichts (11) aus Feldlinsen (110) bestehen, die in einem bestimmten Abstand von den Außenflächen der ersten, formstabilen Elemente (3) angebracht sind und die so dimensioniert sind, dass ihre Grö-βe im wesentlichen der Gesamtsumme der quer zu Rotationsachse der Linse (110) liegenden Teilflächen eines lichtundurchlässigen Bereichs (6) und des benachbarten lichtdurchlässigen Bereichs (7) entspricht, wobei besagte Rotationsachse im wesentlichen in Richtung der Ost-West-Achse verläuft.

7. Abdeckelement nach Anspruch 6, **gekennzeichnet dadurch, dass** als Feldlinsen (110) eine plankonvexe Linse, eine bikonvexe Linse oder eine Fresnel-Linse zum Einsatz kommen.

8. Abdeckelement nach einem der vorherigen Ansprüche 6 oder 7, **gekennzeichnet dadurch, dass** die Krümmung der Linse (110) so eingestellt wird, dass die Ablenkung und Konzentration des Lichts (11) auf den lichtundurchlässigen Bereich (6) erfolgt, wenn die Sonne (12) ihren Höchststand über dem Horizont erreicht, und nach und nach eine Ablenkung und Konzentration des Lichts (11) auf den lichtdurchlässigen Bereich (7) erfolgt, wenn die Sonne (12) den niedrigsten Stand über dem Horizont erreicht.

9. Abdeckelement nach einem der vorherigen Ansprüche 6 bis 8, **gekennzeichnet dadurch, dass** die lichtundurchlässigen Bereiche (6) und die lichtdurchlässigen Bereiche (7) in sich abwechselnden Streifen angeordnet sind, die sich über die komplette Breite des ersten, formstabilen Elements (3) erstrecken und im wesentlichen in Richtung der Ost-West-Achse verlaufen, wobei für jedes aus einem lichtundurchlässigen Streifen (6) und einem benachbarten lichtdurchlässigen Streifen (7) gebildetes Streifenpaar eine Feldlinse (110) vorgesehen ist.

10. Abdeckelement nach einem oder mehreren der vorherigen Ansprüche 6 bis 9, **gekennzeichnet dadurch, dass** jede Linse (110) über eine Längsabmessung verfügt, die der kompletten Breite des ersten Plattenelements (3) entspricht, d.h. gleich der Längsausdehnung der lichtundurchlässigen Streifen (6) und der lichtdurchlässigen Streifen (7) ist, sowie eine Abmessung quer zu ihrer Achse, die der Gesamtbreite eines lichtundurchlässigen Streifens (6) und eines benachbarten lichtdurchlässigen Streifens (7) entspricht, wobei die Linsenachse parallel zu den Längsseiten der darunter liegenden Streifen, d.h. im wesentlich in Richtung der Ost-West-Achse, verläuft.

11. Abdeckelement nach einem oder mehreren der vorherigen Ansprüche 6 bis 10, **gekennzeichnet dadurch, dass** für jede Feldlinse (110) eine entsprechende Fresnel-Feldlinse zum Einsatz kommt.

12. Abdeckelement nach einem oder mehreren der vorherigen Ansprüche 6 bis 11, **gekennzeichnet dadurch, dass** die Feldlinsen (110) in ein zweites, im wesentlichen formstabiles Plattenelement (10) integriert sind, das aus besagten, dort eingefügten Feldlinsen (110) gebildet wird, und das in einem bestimmten Abstand und parallel zur Außenfläche des ersten Plattenelementes (3) angebracht ist und über die selben Abmessungen wie letzteres verfügt.

13. Abdeckelement nach einem oder mehreren der vorherigen Ansprüche, **gekennzeichnet dadurch, dass** das erste Plattenelement (3) aus formstabilem Material, insbesondere aus lichtdurchlässigem Glas oder ähnlichem, und das zweite Plattenelement (10) ebenfalls aus einem formstabilen Material, insbesondere aus lichtdurchlässigem Kunststoff oder ähnlichem besteht.

14. Abdeckelement nach einem oder mehreren der vorherigen Ansprüche, **gekennzeichnet dadurch, dass** es in das Dach eines Gewächshauses integriert ist, wobei das erste Plattenelement (3) als eines der Abdeckelemente des Gewächshausdachs fungiert.

15. Abdeckelement nach einem oder mehreren der vorherigen Ansprüche, **gekennzeichnet dadurch, dass** die lichtundurchlässigen Bereiche (6) und die lichtdurchlässigen Bereiche (7) ein Schachbrettmuster und die Linsen (110) ein entsprechend versetzt angeordnetes Muster bilden, wobei dieses senkrecht zur Rotationsachse der Linsen (110) verläuft.

16. Abdeckelement nach einem oder mehreren der vorherigen Ansprüche, **gekennzeichnet dadurch, dass** die lichtundurchlässigen Bereiche (6) durch Aufbringen z.B. von Farbanstrichen, Klebebändern, Streifen eines lichtundurchlässigen Materials oder ähnlichem auf der äußeren und/oder der inneren Oberfläche des ersten Plattenelementes (3) gebildet werden.

17. Abdeckelement nach einem oder mehreren der vorherigen Ansprüche, **gekennzeichnet dadurch, dass** die lichtundurchlässigen Bereiche (6) durch Anbringen von fotoelektrischen Modulen (106) auf der äußeren Oberfläche des ersten Plattenelementes (3) gebildet werden, wobei die Module vorzugsweise in Gruppen angeordnet werden und dabei Streifen bilden, die im wesentlichen entlang der Ost-West-Achse verlaufen und sich mit lichtdurchlässigen Streifen (7) abwechseln.

18. Abdeckelement nach einem oder mehreren der vorherigen Ansprüche, **gekennzeichnet dadurch, dass** es aus einem ersten, lichtdurchlässigen Plattenelement (3), das mehrere fotoelektrische Module (116) trägt, die als solche Bereiche oder Streifen (6) mit einem niedrigen oder den Wert Null annehmenden Lichtdurchlässigkeitsbeiwert, d.h. die lichtundurchlässigen Bereiche, bilden, einem zweiten, lichtdurchlässigen Plattenelement (8), das im wesentlichen über die gleichen Abmessungen wie das erste Plattenelement (3) verfügt und das der Abdeckung und dem Schutz der fotoelektrischen Module (116) dient, sowie einem dritten Plattenelement (10), das im wesentlichen über die gleichen Abmessungen wie das erste Plattenelement (3) und das zweite Plattenelement (8) verfügt und das mit starren Armen (13) oder einer ähnlichen Vorrichtung in einem bestimmten Abstand vom zweiten Plattenelement (8) gehalten wird und in dem die Feldlinsen (116) integriert sind, sowie einem formstabilen Halte-, Stütz- und Dichtrahmen (9) besteht, der entlang der umlaufenden Kanten des ersten Plattenelements (3) und des zweiten Plattenelements (8) verläuft.

19. Abdeckelement nach einem oder mehreren der vorherigen Ansprüche, **gekennzeichnet dadurch, dass** das erste, lichtdurchlässige Plattenelement (3) als eines der lichtdurchlässigen Abdeckelemente des Gewächshausdachs fungiert, wobei der Rahmen (9) zumindest teilweise aus den formstabilen Trägern gebildet wird, die besagte lichtdurchlässige Abdeckelemente, z.B. in Form metallener Längsträger (4) oder Querträger (5), halten.

20. Abdeckelement nach einem oder mehreren der vorherigen Ansprüche, **gekennzeichnet dadurch, dass** es zur Abdeckung von Gebäuden oder Bereichen beliebiger Art oder Zweckbestimmung, wie z.B. Veranden, Fensterdächer, Sporteinrichtungen oder ähnlichem, eingesetzt wird.

21. Dach für Gewächshäuser oder ähnliche Vorrichtungen mit zwei Schrägen, von denen eine im wesentlichen nach Süden zeigt und die aus einer Vielzahl formstabiler lichtdurchlässiger Plattenelemente mit bestimmten Abmessungen besteht, die nebeneinander und im wesentlichen entlang der Ost-West-Achse verlaufend angeordnet sind, wobei sie von mehreren Längsträgern und formstabilen Querträgern gehalten werden, **gekennzeichnet dadurch, dass** zumindest einige der besagten Plattenelemente nach einem oder mehreren der Ansprüche 1 bis 20 ausgebildet sind.

22. Dach nach Anspruch 21, **gekennzeichnet dadurch, dass** die lichtdurchlässigen Bereiche und die lichtundurchlässigen Bereiche wechselweise in einem vordefinierten regelmäßigen Muster angeordnet sind, wobei besagtes Muster entweder regelmäßig oder unregelmäßig sein kann und eine Funktion der geografischen Breite des Standortes des Daches ist und die Dachschräge nach Süden zeigt und die Ausrichtung auf der Schräge sich an der Ost-West-Achse orientiert.

23. Gewächshausdach mit einfacher, im wesentlichen nach Süden weisenden Schräge, **gekennzeichnet dadurch, dass** besagte Schräge nach Anspruch 21 ausgebildet ist.

24. Gewächshaus mit zweifachem Schrägedach, bei dem eine Schräge im wesentlichen nach Süden weist, **gekennzeichnet dadurch, dass** das Dach nach einem oder mehreren der Ansprüche 21 bis 23 ausgebildet ist.

25. Gewächshaus mit einfachem Schrägedach, das im wesentlichen nach Süden weist, **gekennzeichnet dadurch, dass** das Dach nach einem oder mehreren der Ansprüche 21 bis 23 ausgebildet ist.

26. Abdeckelement für Gewächshäuser nach einem oder mehreren der vorherigen Ansprüche 1 bis 20, **gekennzeichnet dadurch, dass** ein weiteres flaches lichtdurchlässiges äußeres Plattenelement geringer Dicke dem Schutz des Plattenelements, das die integrierten Linsen enthält, dient und eine bessere Ableitung des Regenwassers bewirken soll.

27. Gewächshausdach nach einem oder mehreren der vorherigen Ansprüche 21 bis 23, **gekennzeichnet dadurch, dass** es über ein Abdeckelement nach Anspruch 26 verfügt.

28. Gewächshaus nach Anspruch 24 and 25, **gekennzeichnet dadurch, dass** es über ein Dach nach Anspruch 27 verfügt.

## Revendications

1. Elément de couverture pour serres ou similaires, comprenant un premier élément en forme de panneau transparent rigide (3) ayant une taille prédéterminée, ledit premier élément ayant des zones (6) avec un coefficient de transmission de lumière élevé, en particulier des zones sensiblement transparentes, alternant avec des zones (6) avec un faible coefficient de transmission de lumière, en particulier sensiblement de zéro, c'est-à-dire des zones opaques, **caractérisé en ce qu'**il est prévu des moyens optiques pour dévier et concentrer la lumière (11) sur les zones opaques lorsque le soleil (12) est à sa position la plus haute au-dessus de l'horizon, et pour progressivement dévier et concentrer la lumière (11) sur les zones transparentes lorsque le soleil (16) est à sa position la plus basse au-dessus de l'horizon, afin de contrôler automatiquement le rayonnement solaire (11) dans la serre et empêcher tout changement thermique excessif dans celle-ci.

2. Elément de couverture selon la revendication 1, **caractérisé**- en ce que les zones transparentes (7) et les zones opaques (6) alternent selon un motif régulier prédéterminé, alors que sont prévus des moyens optiques spéciaux, dans chaque paire de zones, se composant d'une zone opaque (6) et d'une zone transparente (7) adjacentes pour dévier et concentrer la lumière (11) de manière alternée sur la zone opaque et la zone transparente (7).

3. Elément de couverture selon les revendications 1 et 2, **caractérisé en ce que** les zones transparentes (7) et les zones opaques (6) sont agencées selon un motif tel qu'au moins une ligne de séparation entre la zone opaque (6) et la zone transparente (7) de chaque paire de zones se composant d'une zone opaque (6) et d'une zone transparente (7) adjacentes est orientée sensiblement le long de l'axe est-ouest.

4. Elément de couverture selon une ou plusieurs des revendications précédentes, **caractérisé en ce qu'**il est installé sur le toit d'une serre, et les zones transparentes (7) et les zones opaques (6) sont agencées selon un motif tel qu'au moins une ligne de séparation entre la zone opaque (6) et la zone transparente (7) de chaque paire de zones se composant d'une zone opaque (6) et d'une zone transparente (7) adjacentes, est inclinée par rapport au faîte (1) du toit sur une étendue correspondant sensiblement à la déviation dudit faîte (1) par rapport à l'axe est-ouest.

5. Elément de couverture selon une ou plusieurs des revendications précédentes, **caractérisé en ce que** le rapport entre les extensions des zones opaques (6) et des zones transparentes (7) est fonction de la latitude du site dans lequel l'élément de couverture est placé.

6. Elément de couverture selon une ou plusieurs des revendications précédentes, **caractérisé en ce que** les moyens optiques spéciaux pour dévier et concentrer la lumière (11) se composent d'une lentille formant condenseur (110), qui est placée à une distance prédéterminée de la face externe du premier panneau rigide (3), la lentille (110) ayant une taille qui correspond sensiblement à la somme des surfaces d'une zone opaque (6) et de la zone transparente (7) adjacentes, transversales par rapport à l'axe de rotation de la lentille (110), qui est orientée avec ledit axe de rotation sensiblement le long de l'axe est-ouest.

7. Elément de couverture selon la revendication 6, **caractérisé en ce que** la lentille formant condenseur (110) est une lentille plano-convexe, une lentille double convexe ou une lentille de Fresnel.

8. Elément de couverture selon l'une quelconque des revendications 6, 7 précédentes, **caractérisé en ce que** la courbure de la lentille (110) est calibrée afin de dévier et de concentrer la lumière (11) sur la zone opaque (6) lorsque le soleil (12) est à sa position la plus haute au-dessus de l'horizon, et dévier et concentrer progressivement la lumière (11) sur la zone transparente (7) lorsque le soleil (12) est à sa position la plus basse au-dessus de l'horizon.

9. Elément de couverture selon l'une quelconque des revendications 6 à 8 précédentes, **caractérisé en ce que** les zones opaques (6) et les zones transparentes (7) sont agencées dans des bandes alternées s'étendant sensiblement sur toute la largeur complète du premier panneau rigide (3) et sont orientées longitudinalement sensiblement le long de l'axe est-ouest, une lentille formant condenseur (110) étant prévue pour chaque paire de bandes, formée par une bande opaque (6) et une bande transparente (7) adjacentes.

10. Elément de couverture selon une ou plusieurs des revendications 6 à 9 précédentes, **caractérisé en ce que** chaque lentille (110) a une extension longitudinale qui est sensiblement égale à la largeur du premier panneau (3), c'est-à-dire égale à l'extension longitudinale des bandes opaques (6) et des bandes transparentes (7), et une extension transversale par rapport à son axe qui est sensiblement égale à la somme des largeurs d'une bande opaque (6) et d'une bande transparente (7) adjacentes, l'axe de la lentille (110) étant orienté parallèlement à l'extension longitudinale des bandes sous-jacentes, c'est-à-dire sensiblement le long de l'axe est-ouest.

11. Elément de couverture selon une ou plusieurs des revendications 6 à 10 précédentes, **caractérisé en ce que** chaque lentille formant condenseur (110) est une lentille formant condenseur de Fresnel équivalente.

12. Elément de couverture selon une ou plusieurs des revendications 6 à 11 précédentes, **caractérisé en ce que** les lentilles formant condenseur (110) sont intégrées dans un second panneau (10) sensiblement rigide, qui est formé avec lesdites lentilles de condenseur (110) solidaires avec celui-ci, ledit panneau (10) étant placé à une distance prédéterminée de et parallèle à la face externe du premier panneau (3) et ayant la même taille que celui-ci.

13. Elément de couverture selon une ou plusieurs des revendications précédentes, **caractérisé en ce que** le premier panneau (3) est réalisé en un matériau rigide, en particulier du verre transparent ou similaire, le second panneau (10) étant également réalisé en un matériau rigide, en particulier du plastique transparent ou similaire.

14. Elément de couverture selon une ou plusieurs des revendications précédentes, **caractérisé en ce qu'**il est intégré dans le toit d'une serre, le premier panneau (3) étant constitué de l'un des panneaux de couverture du toit de la serre.

15. Elément de couverture selon une ou plusieurs des revendications précédentes, **caractérisé en ce que** les zones opaques (6) et les zones transparentes (7) sont agencées selon un motif d'échiquier, alors que les lentilles (110) sont agencées selon un modèle en quinconce correspondant, dans une direction perpendiculaire à l'axe de rotation de la lentille (110) .

16. Elément de couverture selon une ou plusieurs des revendications précédentes, **caractérisé en ce que** les zones opaques (6) peuvent être formées en appliquant des matériaux tels que de la peinture, une bande adhésive, des bandes de matériau opaque ou similaire, sur la face externe et/ou la face interne du premier panneau (3).

17. Elément de couverture selon une ou plusieurs des revendications précédentes, **caractérisé en ce que** les zones opaques (6) sont formées en plaçant des modules photovoltaïques (106) sur la face externe du premier panneau (3), lesquels modules sont de préférence agencés en groupe, formant des bandes orientées sensiblement le long de l'axe est-ouest et alternant avec les bandes transparentes (7).

18. Elément de couverture selon une ou plusieurs des revendications précédentes, **caractérisé en ce qu'**il est composé d'un premier panneau transparent (3), supportant une pluralité de modules photovoltaïques (116) qui forment les zones ou bandes (6) ayant un faible coefficient de transmission de lumière ou coefficient de transmission de lumière nul, c'est-à-dire les zones opaques, d'un deuxième panneau transparent (8) sensiblement de la même taille que le premier panneau (3) ayant la fonction de couvrir et de protéger les modules photovoltaïques (116) et d'un troisième panneau (10) sensiblement de la même taille que les premier (3) et deuxième panneaux (8), qui est supporté à une distance prédéterminée du deuxième panneau (8) par des bras rigides (13) ou similaires, dans lesquels les lentilles formant condenseur (116) sont intégrées, un châssis rigide de retenue, de support et d'étanchéité (9) s'étendant tout le long des bords périphériques des premier (3) et deuxième panneaux (8).

19. Elément de couverture selon une ou plusieurs des revendications précédentes, **caractérisé en ce que** le premier panneau transparent (3) se compose de l'un des panneaux de couverture transparent du toit de la serre, alors que le châssis (9) se compose au moins partiellement d'éléments rigides pour supporter lesdits panneaux transparents, tels que des éléments transversaux (5) ou longitudinaux (4) métalliques.

20. Elément de couverture selon une ou plusieurs des revendications précédentes, **caractérisé en ce qu'**il est utilisé pour recouvrir des bâtiments ou des environnements de tout type ou but, tels que des vérandas, des lucarnes, des bâtiments de sport ou similaires.

21. Toit pour serres ou similaires, ayant deux pentes, l'une étant orientée sensiblement vers le sud, ladite pente vers le sud étant composée d'une pluralité de panneaux transparents rigides ayant une taille prédéterminée, et agencés dans des positions adjacentes sensiblement le long de l'axe est-ouest et supportés par une pluralité d'éléments longitudinaux et d'éléments transversaux rigides, **caractérisé en ce qu'**au moins certains desdits panneaux sont selon une ou plusieurs des revendications 1 à 20.

22. Toit selon la revendication 21, **caractérisé en ce que** les zones transparentes et les zones opaques alternent selon un motif régulier prédéterminé, lequel motif est régulier ou irrégulier, et est fonction de la latitude du site du toit, de la pente du toit orientée vers le sud et de l'orientation de la pente par rapport à l'axe est-ouest.

23. Toit pour serres, ayant une seule pente sensiblement orientée vers le sud, **caractérisé en ce que** ladite pente est selon la revendication 21.

24. Serre, ayant un toit à deux pentes, dont l'une est sensiblement orientée au sud, **caractérisée en ce qu'**elle a un toit selon une ou plusieurs des revendications 21 à 23.

25. Serre, ayant un toit à une pente, sensiblement orientée vers le sud, **caractérisée en ce qu'**elle a un toit selon une ou plusieurs des revendications 21 à 23.

26. Elément de couverture pour serres selon une ou plusieurs des revendications 1 à 20 précédentes, **caractérisé en ce qu'**il est prévu un autre panneau de faible épaisseur transparent plat externe pour protéger le panneau avec les lentilles intégrées et pour favoriser l'évacuation de l'eau de pluie.

27. Toit pour serres selon une ou plusieurs des revendications 21 à 23 précédentes, **caractérisé en ce qu'**il a un élément de couverture selon la revendication 26.

28. Serre selon les revendications 24 et 25, **caractérisée en ce qu'**elle a un toit selon la revendication 27.
